# EUROPEAN PATENT SPECIFICATION

(11) **EP 2 560 225 B1**
(45) Date of publication and mention of the grant of the patent: **11.09.2019**
(21) Application number: 11772128.2
(22) Date of filing: 21.04.2011
(51) Int. Cl.: H01M 8/0208, H01M 8/0228, H01M 8/1018

(54) **METAL PLATE FOR USE AS SOLID POLYMER FUEL CELL SEPARATOR**
METALLPLATTE ZUR VERWENDUNG ALS FESTKÖRPERPOLYMER-BRENNSTOFFSEPARATOR
PLAQUE MÉTALLIQUE DESTINÉE À ÊTRE UTILISÉE COMME SÉPARATEUR DE PILE À COMBUSTIBLE À ÉLECTROLYTE SOLIDE

(30) Priority: 02.02.2011 JP 2011021090; 23.04.2010 JP 2010099922
(43) Date of publication of application: 20.02.2013
(73) Proprietor: JFE Steel Corporation, Tokyo 100-0011 (JP)
(72) Inventor: NISHIYAMA, Naoki, Tokyo 100-0011 (JP); ISHIKAWA, Shin, Tokyo 100-0011 (JP); UJIRO, Takumi, Tokyo 100-0011 (JP); KATO, Yasushi, Tokyo 100-0011 (JP)
(74) Representative: Hoffmann Eitle
(86) International application number: PCT/JP2011/060338
(87) International publication number: WO 2011/132797

(56) References cited:
- EP-A2- 1 148 566
- WO-A1-97/22472
- JP-A- 2001 307 747
- JP-A- 2003 331 859
- JP-A- 2010 034 029
- JP-A- 2010 272 429
- US-A1- 2003 113 577
- US-A1- 2010 209 786

## Description

### [Technical Field]

The present invention relates to a metal sheet for a separator of a proton-exchange membrane fuel cell having not only low contact resistance but also excellent corrosion resistance.

### [Background Art]

Recently, fuel cells which have excellent power generation efficiency and which do not emit CO₂ have been being developed from the viewpoint of global environment conservation. A fuel cell, which generates electricity by electrochemical reaction of H₂ and O₂, and which has a basic structure similar to a sandwich, consists of electrolyte membrane (i.e. ion exchange membrane), two electrodes (i.e. a fuel electrode and an air electrode), diffusion layers of O₂ (i.e. air) and H₂ and two separators. Various kinds of fuel cells including a phosphoric-acid fuel cell, a molten carbonate fuel cell, a solid-oxide fuel cell, an alkaline fuel cell and a PEFC (proton-exchange membrane fuel cell or polymer electrolyte fuel cell) have been being developed depending on the kind of electrolyte membrane.

Among these fuel cells, a proton-exchange membrane fuel cell is advantageous in comparison to the other kinds of fuel cells for the following reasons:
(a) the electricity generation temperature of the fuel cell is about 80°C, which means the fuel cell can generate electricity at a significantly low temperature,
(b) weight saving and size reduction of the main body of the fuel cell is possible, and
(c) the fuel cell can be started up in a short time and has high fuel efficiency and high output density.

Therefore, proton-exchange membrane fuel cells are nowadays being given the most attention as on-board power supplies of electric vehicles, stationary-type compact electric generators for household use or business use and portable and compact dispersed power systems.

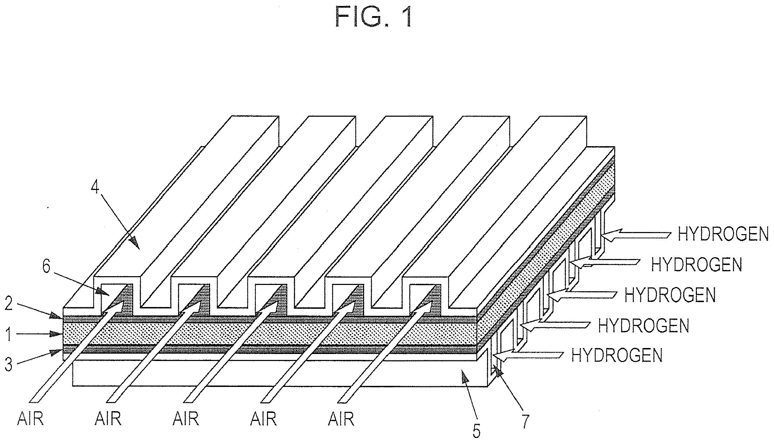

A proton-exchange membrane fuel cell, which generates electricity from H₂ and O₂ through a polymer membrane, has, as illustrated in Fig. 1, a single component, that is to say a single cell, in which a membrane-electrode assembly 1 is placed between gas diffusion layers 2 and 3 (ex. carbon paper) and between separators 4 and 5, and generates electromotive force between the separators 4 and 5.

Incidentally, the membrane-electrode assembly 1 is called an MEA (i.e. membrane-electrode assembly) and is composed of an integrated combination of a polymer membrane and an electrode material including carbon black carrying platinum catalyst, which is attached on both sides of the membrane-electrode assembly 1 and has a thickness of tens to hundreds of micrometers. Moreover, there are also many cases where the gas diffusion layers 2 and 3 are attached to the membrane-electrode assembly 1 in order to make an integrated combination.

In the case where a proton-exchange membrane fuel cell is applied to the usages described above, tens to hundreds of the single cells described above are connected in series to form a fuel cell stack.

Here, separators 4 and 5 are required to play the following roles:
(A) separators which separate the single cells,
(B) electric conductors through which generated electrons are transported,
(C) air flow channels 6 through which O₂ (that is to say air) is transported and hydrogen flow channels 7 through which H₂ is transported, and
(D) exhaust flow channels through which generated water and gas are discharged (air flow channels 6 and hydrogen flow channels 7 also play these roles).

Moreover, it is necessary that separators having excellent durability and conductivity be used in order to put a proton-exchange membrane fuel cell into practical use.

As for durability, in the case where a proton-exchange membrane fuel cell is used as an onboard power supply of an electric vehicle, it is assumed that it will run for 5,000 hours. Moreover, in the case where a proton-exchange membrane fuel cell is used as a stationary-type compact electric generator for household use, it is assumed that it will run for 40,000 hours. Therefore, a separator is required to have corrosion resistance so that it can run for a long time, because elution of metal ions that is caused by corrosion reduces proton conductivity of an electrolyte membrane.

As for conductivity, it is required that contact resistance between a separator and a gas diffusion layer be as low as possible, because an increase in the contact resistance between a separator and a gas diffusion layer decreases power generation efficiency of a proton-exchange membrane fuel cell. In other word, it can be said that the lower the contact resistance between a separator and a gas diffusion layer is, the better the power generation efficiency is.

Up to now, a proton-exchange membrane fuel cell which uses graphite as a separator has been put into practical use. The separator which is made of graphite has not only a low contact resistance but also an advantage that it is not corroded. However, a separator which is made of graphite has a disadvantage that it is easily broken by an impact, which results not only in difficulty of size reduction of the fuel cell but also in an increase in machining cost for forming an air flow channel and a hydrogen flow channel. These disadvantages of a separator which is made of graphite are causes of obstruction of the spread of proton-exchange membrane fuel cells.

Therefore, application of metal materials instead of graphite has been being attempted. In particular, from the viewpoint of improvement of durability, various investigations have been being conducted in order to put a separator which is made of stainless steel, titanium or titanium alloy into practical use.

For example, Patent Literature 1 discloses a method for using metal which tends to form a passive state film such as stainless steel or titanium alloy as a separator. However, forming of a passive state film increases contact resistance, which results in a decrease in power generation efficiency. Therefore, it was pointed out that there are problems to be solved in that these metal materials have not only a larger contact resistance but also poorer corrosion resistance in comparison to graphite.

In addition, Patent Literature 2 discloses a method for decreasing contact resistance and achieving high power output by gold-plating the surface of a separator which is made of a metal such as austenitic stainless steel (SUS304). However, it is difficult for a thin gold plating to prevent the occurrence of pinholes, but the problem of cost is left unsolved for a thick gold plating.

In addition, Patent Literature 3 discloses a method for improving conductivity (i.e. decreasing contact resistance) of a separator by dispersion of carbon powder into a substrate of ferritic stainless steel. However, the problem of cost is still left unsolved even in the case where carbon powder is used, because considerable cost is incured for the surface treatment of a separator. Moreover, it has been pointed out that there is a problem that a separator which has undergone surface treatment significantly loses corrosion resistance in the case where the separator gets a flaw when assembling is performed.

### [Citation List]

### [Patent Literature]

[PTL 1] Japanese Unexamined Patent Application Publication No. 8-180883
[PTL 2] Japanese Unexamined Patent Application Publication No. 10-228914
[PTL 3] Japanese Unexamined Patent Application Publication No. 2000-277133

EP 1 148 566 A2 relates to a fuel cell separator with a substrate portion having a predetermined concave-convex shape, an underlying coating layer formed on the substrate portion, a first coating layer coating the substrate portion and the underlying coating layer, and a second coating layer formed thereon.

US 2003/0113577 A1 relates to a surface-treated electrically conductive metal element comprising an electrically conductive metal substrate having a layer of Ni-Sn alloy overlying an electrically conductive surface of the substrate and at least one layer of Ag or of Ag containing Sn overlying the Ni-Sn alloy layer.

### [Summary of Invention]

### [Technical Problem]

An object of the present invention is to advantageously solve the problems described above and to provide a method for manufacturing at a low cost a metal sheet which can be ideally used as a separator of a proton-exchange membrane fuel cell and which has not only low contact resistance but also excellent durability in the environment in which the separator is used.

### [Solution to Problem]

The present inventors conducted various investigations in order to develop a material having excellent corrosion resistance in the environment in which a separator of a proton-exchange membrane fuel cell is used (sulfuric acid environment in which a pH value is 3 and in which a temperature is 80°C).

In other word, the present inventors conducted investigations on corrosion resistance in the environment in which the separator is used and cost of materials coated with various kinds of metals and oxides, and, as a result, found that a material coated with Sn can be made at a low cost and has comparatively good corrosion resistance, although the corrosion resistance is not enough to attain the object.

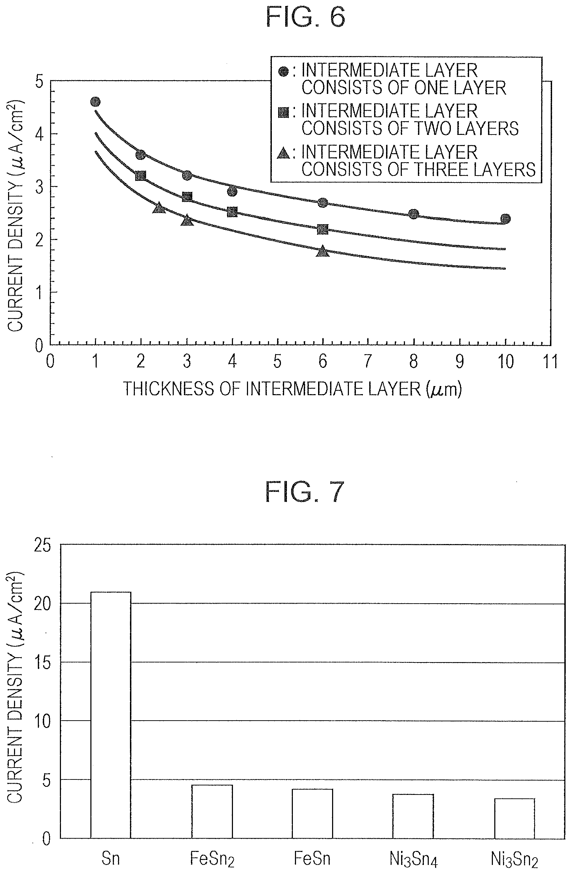

Therefore, the present inventors further conducted investigations, and, as a result, as illustrated in Fig. 7, found that, although a single substance of metal Sn does not have enough corrosion resistance, a Sn alloy which contains one or both of Ni and Fe has excellent corrosion resistance in the environment in which the separator of a proton-exchange membrane fuel cell is used. In particular, it is preferable that the Sn alloy be an intermetallic compound Ni₃Sn₂. On the other hand, a problem was found that intermetallic compounds Ni₃Sn₂ and Ni₃Sn₄ have high contact resistance.

Here, Fig. 7 illustrates the values of current density observed at a potential of 1.0 V in forward scan of the 5th cycle of cyclic voltammogram with a potential scan range of -0.2 to 1.2 V(vs.SHE) and with a sweep rate of 200 mV/min, using saturated KCl-Ag/AgCl as a reference electrode, for the samples of SUS447J1 which were coated with various kinds of films having thickness of 10 µm and which were dipped in sulfuric acid aqueous solution the temperature of which was 80°C and the pH value of which was 3. The obtained current density is used as an indicator of stability in the environment in which the separator is used and a sample having the less current density is estimated as having the more stability.

Incidentally, the present inventors estimated a Ni-W alloy and a Ni-Cu alloy in the same way and found that these alloys had significantly poor corrosion resistance, as these alloys had very large current density.

Moreover, the present inventors conducted investigations in order to solve the problem that the intermetallic compounds Ni₃Sn₂ and Ni₃Sn₄ have high contact resistance, and, as a result, found that contact resistance can be effectively reduced in the case where a Sn alloy which contains one or both of Ni and Fe, in particular, preferably Ni₃Sn₂, contains conducting particles.

In addition, it was found that there are cases where corrosion resistance is reduced in the case where a metal sheet is coated with a Sn alloy which contains one or both of Ni and Fe, in particular, preferably Ni₃Sn₂, which contains conducting particles, in comparison to the case where a metal sheet is coated with a Sn alloy which contains one or both of Ni and Fe, in particular, preferably Ni₃Sn₂, which does not contain conducting particles.

The reason for this is thought to be that there are cases where the base metal sheet is corroded through defects formed on the boundary between the Sn alloy which contains one or both of Ni and Fe, in particular, preferably Ni₃Sn₂, and the conducting particles in the case where the metal sheet is coated with the Sn alloy which contains one or both of Ni and Fe, in particular, preferably Ni₃Sn₂, which contains the conducting particles.

Therefore, the present inventors further conducted investigations in order to solve this problem, and, as a result, found that it is possible to achieve not only excellent conductivity but also excellent corrosion resistance by forming an intermediate layer which is made Ni₃Sn₂ between the metal sheet and the film which contains the conducting particles.

Moreover, it was found that further improvement of corrosion resistance can be achieved by forming a multilayered intermediate layer. In addition, in this case, the thickness of the intermediate layer can be made thinner.

The reason for this is thought to be that, although there are cases where a base metal sheet (here, a substrate in other word) is corroded in the case where the thickness of the intermediate layer, for example, of the plated film, is small, because the probability of a defect in a plated layer reaching the base metal sheet is high, the probability of a defect in a multilayer reaching directly the outside environment is low, because the positions of defects in the different layers differ from each other, which results in improvement of corrosion resistance. In addition, the thickness of each plated layer can be made further thinner due to the fact that the positions of defects in the different layers differ from each other, which results in achievement of a decrease not only in the thickness of the intermediate layer but also in the total thickness of the surface film.

The present invention has been completed on the basis of the knowledge described above.

In other word, subject matter of the present invention is as follows.

1. A metal sheet for a separator of a proton-exchange membrane fuel cell, the metal sheet having a substrate covered with a film which is made of a Sn alloy layer, the selected from a stainless steel sheet, a titanium sheet and a titanium alloy sheet, a film covering the substrate and made of an Sn alloy layer containing one or both of Ni and Fe, the film containing conducting particles, and a multilayered intermediate layer made of Ni₃Sn₂ between the film and the substrate.
2. The metal sheet for a separator of a proton-exchange membrane fuel cell according to item 1. , the Sn alloy layer being made of Ni₃Sn₂.
3. The metal sheet for a separator of a proton-exchange membrane fuel cell according to item 1. or 2.,
   the conducting particles having an electrical conductivity of 1×10² Ω⁻¹·m⁻¹ or more and having a mean grain size of 0.1 µm or more and 6 µm or less.
4. The metal sheet for a separator of a proton-exchange membrane fuel cell according to any one of items 1. to 3., the content of the conducting particles being 0.1 mass% or more and 30 mass% or less.
5. The metal sheet for a separator of a proton-exchange membrane fuel cell according to any one of items 1. to 4., the conducting particles being made of one or more of carbon black, TiC, VC, TiN, TiB₂, VB₂, CrB₂, TiSi₂, ZrSi₂ and NbSi₂.
6. The metal sheet for a separator of a proton-exchange membrane fuel cell according to any one of items 1. to 5., the intermediate layer consisting of 2 layers or more and 4 layers or less and having a mean total thickness of 6 µm or less.

### [Advantageous Effects of Invention]

According to the present invention, it is possible to obtain at low cost a metal sheet which can be ideally used as a separator of a proton-exchange membrane fuel cell and which has not only low contact resistance but also excellent durability in the environment in which the separator of a proton-exchange membrane fuel cell is used.

Moreover, improvement of corrosion resistance can be achieved, and the thickness of each intermediate layer can be reduced.

### [Brief Description of Drawings]

Fig. 1 is a schematic diagram illustrating a basic structure of a fuel cell.
Fig. 2 illustrates a method for measuring contact resistance.
Fig. 3 illustrates an example of a thin film X-ray diffraction pattern of a sample which did not contain conducting particles.
Fig. 4 illustrates the relationship between content of conducting particles (TiN particles) in a film and contact resistance.
Fig. 5 illustrates the film structures according to the present invention as follows: (a) illustrates a case where a film which contained conducting particles was formed directly on the surface of a substrate, (b) illustrates a case where a film which contained conducting particles was formed on the surface of an single intermediate layer which was formed on the surface of a substrate, and (c) illustrates a case where a film which contained conducting particles was formed on the surface of an intermediate layer consisting of three layers which was formed on the surface of a substrate.
Fig. 6 illustrates the relationships between the total thickness of an intermediate layer and current density for the three kinds of intermediate layers which consisted of one, two and three layers, respectively.
Fig. 7 illustrates the comparison of the values of current density observed at a potential of 1.0 V in forward scan of the 5th cycle of cyclic voltammogram under the specified conditions for the samples of SUS447J1 which were coated with various kinds of films having thickness of 10 µm.

### [Description of Embodiments]

The present invention will be specifically described as follows.
(1) A metal sheet to be used as a substrate Metal sheets which have excellent corrosion resistance including a stainless steel sheet (a ferritic stainless steel sheet, an austenitic stainless steel sheet and a duplex stainless steel sheet), a titanium sheet and a titanium alloy sheet are used.
(2) A film
   In the present invention, the substrate is covered with a film which is made of a Sn alloy which contains one or both of Ni and Fe, in particular, more preferably of an intermetallic compound Ni₃Sn₂.
   An intermetallic compound Ni₃Sn₂ is more preferable in the environment in which a separator of a proton-exchange membrane fuel cell is used (sulfuric acid environment in which a pH value is 3 and in which a temperature is 80°C).
   Although it is not clear why a Sn alloy which contains one or both of Ni and Fe, in particular, preferably an intermetallic compound Ni₃Sn₂ has excellent stability in the environment in which a separator of a proton-exchange membrane fuel cell is used, the reason is considered to be as follows.
   It is considered that Sn-Ni bonding or Sn-Fe bonding in a Sn alloy is more stable than Sn-Sn bonding in a single substance of Sn, which results in better corrosion resistance. In particular, it is considered that, as Ni₃Sn₂, according to the binary alloy phase diagram of Ni-Sn, is formed at a high temperature in the range of 790°C or higher, Sn-Ni bonding is very stable, which results in excellent corrosion resistance.
(3) A method for forming a film on the surface of a substrate

In order to cover the surface of the substrate described above with a film which is made of a Sn alloy which contains one or both of Ni and Fe, in particular, preferably an intermetallic compound Ni₃Sn₂, a plating method is, in particular, ideally used, and, in this case, it is appropriate that galvanic electroplating is performed in a plating bath which is adjusted to the specified chemical composition.

Moreover, in order to cover the surface of the substrate with a film which is made of a Sn alloy which contains one or both of Ni and Fe, in particular, preferably Ni₃Sn₂, which contains conducting particles (hereinafter, a film containing conduction particles), it is appropriate that galvanic electroplating is performed in a plating bath which is adjusted to the specified chemical composition, in which the specified amount of the conducting particles is dispersed and which is being stirred. Here, a stirring method such as a propeller method or a pump method is ideally used.

In the case where the film according to the present invention is formed by using a plating method, it is preferable that the content of the conducting particles in the plating bath be set to be 1 g/cm³ or more and 6 g/cm³ or less. In the case where the content of the conducting particles is less than 1 g/cm³, a sufficient amount of the conducting particles cannot be contained in the Ni₃Sn₂ layer. On the other hand, in the case where the content of the conducting particles is more than 6 g/cm³, the particles tend to precipitate in the plating bath, which results in difficulty in making the conducting particles be contained uniformly in the Ni₃Sn₂ layer.

Although a method of forming a film which contains conducting particles by using a plating method has been described so far, the film may be formed by using the following methods.

### 1) Physical vapor deposition method (PVD method)

In this method, two or more kinds of metal are used as targets in order to cover the surface of the substrate with a film which is made of a Sn alloy which contains one or both of Ni and Fe, in particular, preferably an intermetallic compound Ni₃Sn₂. Moreover, a film which contains conducting particles can be formed by stopping in the middle of forming a film which is made of a Sn alloy which contains one or both of Ni and Fe, in particular, preferably Ni₃Sn₂, by distributing the conducting particles over the face of the substrate, and then by restarting forming a film which is made of a Sn alloy which contains one or both of Ni and Fe, in particular, preferably Ni₃Sn₂ by using a physical vapor deposition method (ex. an evaporation method).

### 2) Alloying method

In addition, this method is used to form a film which is made of a Sn alloy which contains one or both of Ni and Fe, in particular, preferably an intermetallic compound Ni₃Sn₂, by performing alloying treatment (heat treatment) after forming a layer which is made of Sn and a layer which is made of one or both of Ni and Fe.

Specifically, a Ni₃Sn₂ layer can be formed by covering the substrate with a layer in which the mixing ratio of metal Ni to metal Sn is 3 : 2 in terms of atomic ratio, then by performing alloying treatment (heat treatment) at a temperature of 790°C or higher.

In addition, a Ni₃Sn₄ layer can be formed by covering the substrate with a layer in which the mixing ratio of metal Ni to metal Sn is 3 : 4 in terms of atomic ratio, then by performing alloying treatment (heat treatment) at a temperature of 230°C or higher and 790°C or lower.

Moreover, a FeSn layer can be formed by covering the substrate with a layer in which the mixing ratio of metal Fe to metal Sn is 1 : 1 in terms of atomic ratio, then by performing alloying treatment (heat treatment) at a temperature of 510°C or higher, and a FeSn₂ layer can be formed by covering the substrate with a layer in which the mixing ratio of metal Sn to metal Fe is 2 : 1 in terms of atomic ratio, then by performing alloying treatment (heat treatment) at a temperature of 232°C or higher and lower than 510°C.

Incidentally, it is preferable that the thickness of a film which contains conducting particles be equal to the minimum grain size of the conducting particles or more and 15 µm or less. It is not preferable that the thickness of the film be less than the grain size of the conducting particles, because the conducting particles would tend to fall off the film. On the other hand, it is rather uneconomical that the thickness of the film be more than 15 µm, because the improvement effect of corrosion resistance saturates.

### (4) Conducting particles

In addition, the content of the conducting particles in the film, which is made of a Sn alloy which contains one or both of Ni and Fe, in particular, preferably an intermetallic compound Ni₃Sn₂, and which is formed by using a plating method, a physical vapor deposition method or alloying treatment as described above, is to be 0.1 mass% or more and 30 mass% or less. In the case where the content of the conducting particles in the film which contains the conducting particles is less than 0.1 mass%, the effect of decreasing contact resistance is negligibly small. On the other hand, in the case where the content of the conducting particles in the film which contains the conducting particles is more than 30 mass%, there is a problem that the film tends to fall off due to the brittleness of the film.

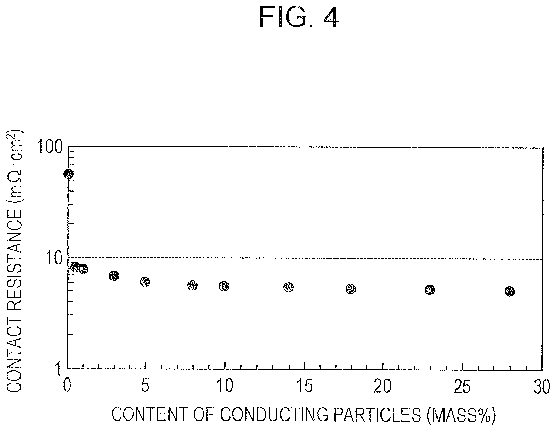

Fig. 4 illustrates the results of the investigation of the relationship between content of conducting particles (TiN particles) in a film and contact resistance.

As illustrated in this figure, it is understood that contact resistance rapidly drops to 10 mΩ·cm² or less, in the case where the content of the conducting particles is 0.1 mass% or more, that is to say, conductivity significantly increases.

In addition, it is preferable that the mean grain size of the conducting particles described above be 0.1 µm or more and 6 µm or less. The reason for this is that, in the case where the mean grain size of the conducting particles is less than 0.1 µm, the effect of decreasing contact resistance is insufficient, and that, on the other hand, in the case where the mean grain size of the conducting particles is more than 6 µm, the film tends to fall off due to the brittleness of the film.

In addition, from the viewpoint of decreasing contact resistance, it is preferable that the electrical conductivity of the conducting particles be 1×10² Ω⁻¹·M⁻¹ or more. The reason for this is that, in the case where the electrical conductivity is less than 1×10² Ω⁻¹·m⁻¹, it is difficult to decrease contact resistance to the level of the object of the present invention or less. Here, the target value of contact resistance of the present invention is less than 10 mΩ·cm².

Moreover, the conducting particles according to the present invention are required to have excellent stability in the environment in which a separator is used in addition to the characteristics described above.

The examples of the conducting particles which satisfy the requirements described above include carbon black, TiC, VC, TiN, TiB₂, VB₂, CrB₂, TiSi₂, ZrSi₂ and NbSi₂.

### (5) Intermediate layer

Although the cases where a film which contains conducting particles is formed directly on the surface of a substrate have been described so far, a multilayered intermediate layer which is made of Ni₃Sn₂, is formed between the substrate and the film which contains the conducting particles, according to the present invention. In addition, it is preferable that the chemical composition of the intermediate layer be the same as that of the film described above in order to achieve adhesion between the intermediate layers and between the intermediate layer and the film.

Corrosion resistance can be further significantly improved by forming the intermediate layers described above.

Moreover, the thickness of the intermediate layer can be decreased by making the intermediate layer described above multilayered.

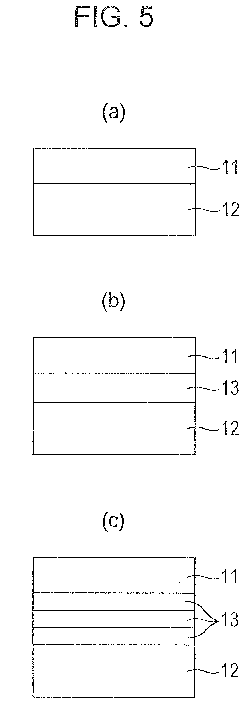

Fig. 5 illustrates the film structures according to the present invention.

Fig. 5(a) illustrates a case where a film 12 which contains conducting particles is formed directly on the surface of substrate 11.

In this case, the base metal sheet may be corroded through defects formed on the boundaries between Ni₃Sn₂ and the conducting particles in the film which contains the conducting particles.

Fig. 5(b) illustrates a case where film 12 which contains conducting particles is formed on the surface of a single intermediate layer 13 which is formed on the surface of substrate 11.

Improvement of corrosion resistance can be achieved by forming an intermediate layer 13 between a substrate 11 and a film 12 which contains the conducting particles, as illustrate in this figure, because the influence of the defects formed on the boundaries between Ni₃Sn₂ and the conducting particles is weakened.

Here, it is preferable that the thickness of the intermediate layer be 5 µm or more in order to completely eliminate the harmful influence of the defects formed on the boundaries between Ni₃Sn₂ and the conducting particles in the film which contains the conducting particles.

Fig. 5(c) illustrates a case where a film 12 which contains conducting particles is formed on the surface of an intermediate layer 13 consisting of three layers which is formed on the surface of a substrate 11.

In the case where the multilayered intermediate layer is formed like this, there is not only an advantage that further improvement of corrosion resistance is achieved but also an advantage that the thickness of each layer composing the multilayer can be made thinner, which results in a reduction in the total thickness of the intermediate layer.

The reason for this is that, although a base metal sheet may be corroded in the case where the thickness of the intermediate layer, for example, the thickness of the plated layer, is small, because the probability of a defect in a plated layer reaching the base metal sheet is high, the probability of a defect in a multilayer directly reaching the outside environment is low, because the positions of defects in the different layers differ from each other.

Therefore, in the case where a multilayered intermediate layer is formed, the thickness of each layer composing the intermediate layer can be made about 1 µm, which means that the total thickness of the intermediate layer can be made 3 µm, for example, in the case where the intermediate layer consisted of three layers, which results in the total thickness of the film being less than that of the film which has a single intermediate layer.

Incidentally, in the case where a multilayered intermediate layer is formed, although there are no particular limitations on the number of layers composing the intermediate layer, it is preferable that the number be about 2 to 4. In addition, in this case, it is preferable that the thickness of each layer composing the intermediate layer be about 0.5 to 3 µm.

Fig. 6 illustrates the investigation results for the relationships between the total thickness of an intermediate layer and current density for the three kinds of intermediate layers which consisted of one layer (the total thickness was 1, 3, 4, 6, 8, or 10 µm), two layers (the total thickness was 1+1=2µm, 1.5+1.5=3µm, 2+2=4µm or 3+3=6 µm) and three layers (the total thickness is 0.8+0.8+0.8=2.4µm, 1+1+1=3µm, 2+2+2=6 µm), respectively.

It is understood that, as illustrated in this figure, among the intermediate layers of the same total thickness, the higher the number of layers composing the intermediate layer is, the lower the current density is, that is to say, higher stability in the environment in which a separator is used is achieved.

Incidentally, a pre-treatment layer may be additionally formed between the Ni₃Sn₂ layer (the film which contains conducting particles or the intermediate layer as described above) and the substrate in order to improve the required characteristics for a separator (ex. prevention of elution of Ni into the substrate or improvement of adhesion between the substrate and the Ni₃Sn₂ layer), according to the present invention. For example, a Ni strike layer or a Au strike layer may be formed in order to improve adhesion between the substrate and the Ni₃Sn₂ layer.

### (6) A stainless steel to be used as a substrate

As there are no particular limitations on the kind or other characteristics of stainless steel to be used as a substrate according to the present invention as long as the stainless steel has corrosion resistance which is required in the working environment of a fuel cell, any one of ferritic stainless steel, austenitic stainless steel and duplex stainless steel may be used. However, it is necessary that Cr content be 16 mass% or more in order to achieve the minimum corrosion resistance, preferably 18 mass% or more.

Chemical compositions which can be ideally used for ferritic stainless steel, austenitic stainless steel and duplex stainless steel will be described as follows. Here, concerning a chemical composition, % denotes mass%, unless otherwise noted.

### 1) Ideal chemical composition of ferritic stainless steel

### C: 0.03% or less

Although it is preferable that C content be as small as possible, because C decreases corrosion resistance by combining with Cr in steel, there is not a significant reduction in corrosion resistance, in the case where C content is 0.03% or less. Therefore, it is preferable that C content be 0.03% or less, more preferably 0.015% or less.

### Si: 1.0% or less

Although Si is a chemical element that is used for deoxidation, it is preferable that Si content be 1.0% or less, more preferably 0.5% or less, because excessive Si content decreases ductility.

### Mn: 1.0% or less

It is preferable that Mn content be 1.0% or less, more preferably 0.8% or less, because Mn decreases corrosion resistance by combining with S and by forming MnS.

### S: 0.01% or less

It is preferable that S content be 0.01% or less, more preferably 0.008% or less, because S decreases corrosion resistance by combining with Mn and by forming MnS as described above.

### P: 0.05% or less

Although it is preferable that P content be as small as possible, because P decreases ductility, there is not a significant reduction in ductility, in the case where P content is 0.05% or less. Therefore, it is preferable that P content be 0.05% or less, more preferably 0.04% or less.

### Al: 0.20% or less

Although Al is a chemical element that is used for deoxidation, it is preferable that Al content be 0.20% or less, more preferably 0.15% or less, because excessive Al content decreases ductility.

### N: 0.03% or less

Although it is preferable that N content be as small as possible, because N decreases corrosion resistance by combining with Cr in steel, there is not a significant reduction in corrosion resistance, in the case where N content is 0.03% or less. Therefore, it is preferable that N content be 0.03% or less, more preferably 0.015% or less.

### Cr: 16% or more

Cr is a chemical element that is essential in achieving corrosion resistance for stainless steel, and it is necessary that Cr content be 16% or more in order to realize this effect. In the case where Cr content is less than 16%, a separator cannot be used for a long time. In particular, it is preferable that Cr content be 18% or more, more preferably 20% or more, in the case where there is a problem of change in environment in which the separator is used. On the other hand, it is preferable that Cr content be 40% or less in the case where workability is important, more preferably 35% or less, because excessive Cr content of more than 40% significantly reduces workability.

### One, two or all of Nb, Ti and Zr: 1.0% or less in total

Nb, Ti and Zr are all chemical elements that are effective for improving corrosion resistance by fixing C and N in steel as carbides and nitrides. However, the content of one, two or all of these chemical elements is limited to 1.0% or less in total, because excessive content of these chemical elements of more than 1.0% in total significantly decreases ductility. Here, it is preferable that the content of one, two or all of these chemical elements be 0.02% or more in total in order to sufficiently realize the effect of these chemical elements.

Although the essential compositions have been described so far, other chemical elements may be contained as needed, according to the present invention.

### Mo: 0.02% or more and 4.0% or less

Mo is a chemical element that is effective for improving corrosion resistance, in particular, localized corrosion resistance, and it is preferable that of Mo content be 0.02% or more. On the other hand, it is preferable that the upper limit of Mn content be 4.0%, more preferably 2.0% or less, because excessive Mo content of more than 4.0% significantly reduces ductility.

In addition, Ni, Cu, V and W may be contained with the content of each chemical element being 1.0% or less in order to improve corrosion resistance. Moreover, Ca, Mg, REM (Rare Earth Metal) and B may be contained with the content of each chemical element being 0.1% or less.

The remainder of the chemical composition consists of Fe and inevitable impurities. Among the inevitable impurities, it is preferable that the content of O (oxygen) be 0.02% or less.

### 2) Ideal chemical composition of austenitic stainless steel

### C: 0.08% or less

C reduces corrosion resistance, because C reacts with Cr in austenitic stainless steel for a separator, forming chemical compounds, and precipitates as Cr carbides at the grain boundaries. Therefore, it is preferable that C content be as small as possible, and it does not significantly reduce corrosion resistance, in the case where C content is 0.08% or less. Therefore, it is preferable that C content be 0.08% or less, more preferably 0.03% or less.

### Cr: 16% or more

Cr is a chemical element that is essential for achieving corrosion resistance which is a basic characteristic of austenitic stainless steel, and a separator cannot be used for a long time, in the case where Cr content is less than 16%. Therefore, Cr content is set to be 16% and more. On the other hand, it is difficult to obtain an austenitic microstructure, in the case where Cr content is more than 30%. Therefore it is preferable that Cr content be 30% or less, more preferably 18% or more and 26% or less.

### Mo: 0.1% or more and 10.0% or less

Mo is a chemical element that is effective for suppressing localized corrosion including crevice corrosion of stainless steel for a separator. It is necessary that Mo content be 0.1% or more in order to realize this effect. On the other hand, in the case where Mo content is more than 10.0%, there is a significant embrittlement of stainless steel for a separator, which results in a decrease in productivity. Therefore, it is preferable that Mo content be 0.1% or more and 10% or less, more preferably 0.5% or more and 7.0% or less.

### Ni: 7% or more and 40% or less

Ni is a chemical element that stabilizes the austenitic phase. In the case where Ni content is less than 7%, the effect of stabilization of austenitic phase cannot be achieved. On the other hand, in the case where Ni content is more than 40%, Ni is excessively consumed, which results in an increase in cost. Therefore, it is preferable that Ni content be 7% or more and 40% or less in order to improve hot workability.

In addition to C, Cr, Mo and Ni described above, the following chemical elements may be contained as needed for austenitic stainless steel for a separator according to the present invention.

### N: 2.0% or less

N is effective for suppressing localized corrosion of austenitic stainless steel for a separator. However, it is preferable that N content be 2.0% or less, because it is industrially difficult to make N content more than 2.0%. Moreover, it takes long time to make N content more than 0.4% at a smelting stage of stainless steel for a separator by a common smelting method, which results in a decrease in productivity. Therefore, it is preferable that N content be 0.4% or less from the viewpoint of cost, more preferably 0.01% or more and 0.3% or less.

### Cu: 0.01% or more and 3.0% or less

Cu is a chemical element that is effective for improving corrosion resistance of austenitic stainless steel for a separator. It is preferable that Cu content be 0.01% or more in order to realize this effect. However, in the case where Cu content is more than 3.0%, there is a decrease in hot workability, which results in a decrease in productivity. Therefore, in the case where Cu is contained, it is preferable that Cu content be 3.0% or less, more preferably 0.01% or more and 2.5% or less.

### Si: 0.01% or more and 1.5% or less

Si is a chemical element that is effective for deoxidation and is added at the smelting stage of austenitic stainless steel for a separator. It is preferable that Si content be 0.01% or more in order to realize this effect. However, the excessive content of Si causes hardening of stainless steel for a separator and a decrease in ductility. Therefore, in the case where Si is contained, it is preferable that Si content be 1.5% or less, more preferably 0.01% or more and 1.0% or less.

### Mn: 0.001% or more and 2.5% or less

Mn is a chemical element that is effective for suppressing grain boundary segregation of S and for preventing fracture when hot rolling is performed, because Mn is effective for reducing solid solution S by being combined with S which is inevitably mixed into austenitic stainless steel for a separator. This effect is realized in the case where Mn content is 0.001% or more and 2.5% or less. Therefore, in the case where Mn is contained, it is preferable that Mn content be 0.001% or more and 2.5% or less, more preferably 0.001% or more and 2.0% or less.

### One, two, three or all of Ti, Nb, V and Zr: 0.01% or more and 0.5% or less in total

Any of Ti, Nb, V and Zr forms carbides by reacting with C in austenitic stainless steel. As Ti, Nb, V and Zr fix C in this way, these chemical elements are effective for improving grain boundary corrosion resistance of austenitic stainless steel for a separator. In particular, in the case where C content is 0.08% or less, the effect of improving corrosion resistance by containing one, two, three or all of Ti, Nb, V and Zr is realized, in the case where the content of one, two, three or all of Ti, Nb, V and Zr is 0.01% or more in total.

On the other hand, the effect saturates, even if the content of one, two, three or all of Ti, Nb, V and Zr is more than 0.5%. Therefore, in the case where Ti, Nb, V or Zr is contained, it is preferable that the content of one, two, three or all of Ti, Nb, V and Zr be 0.01% or more and 0.5% or less.

In addition to the chemical elements described above, Ca, Mg, B, Rare Earth Metal (that is to say REM) may be contained with the content of each chemical element being 0.1% or less in order to improve hot workability of austenitic stainless steel for a separator, according to the present invention. Al within a content range of 0.2% or less may be contained for the purpose of deoxidation at a stage of smelting.

The remainder of the chemical composition consists of Fe and inevitable impurities. Among the inevitable impurities, it is preferable that the content of O (oxygen) be 0.02% or less.

### 3) Ideal chemical composition of duplex stainless steel

### C: 0.08% or less

C reduces corrosion resistance, because C reacts with Cr, forming chemical compounds, and precipitates as Cr carbides on the grain boundaries. Therefore, it is preferable that C content be as small as possible, and it does not significantly reduce corrosion resistance, in the case where C content is 0.08% or less. Therefore, it is preferable that C content be 0.08% or less, more preferably 0.03% or less.

### Cr: 16% or more

Cr is a chemical element that is essential in achieving corrosion resistance which is a basic characteristic as duplex stainless steel, and a separator cannot be used for a long time, in the case where Cr content is less than 16%. Therefore, Cr content is set to be 16% and more. On the other hand, it is difficult to obtain duplex microstructure (hereinafter, refers to duplex microstructure consisting of ferritic phase and austenitic phase, unless otherwise noted), in the case where Cr content is more than 30%. Therefore it is preferable that Cr content be 30% or less, more preferably 20% or more and 28% or less.

### Mo: 0.1% or more and 10.0% or less

Mo is a chemical element that is effective for suppressing localized corrosion including crevice corrosion. It is necessary that Mo content be 0.1% or more in order to realize this effect. On the other hand, in the case where Mo content is more than 10.0%, there is a significant embrittlement of stainless steel, which results in a decrease in productivity. Therefore, it is preferable that Mn content be 0.1% or more and 10% or less, more preferably 0.5% or more and 7.0% or less.

### Ni: 1% or more and 10% or less

Ni is a chemical element that stabilizes austenitic phase. In the case where Ni content is less than 1%, it is difficult to obtain duplex microstructure, because it is difficult to obtain austenite phase. On the other hand, in the case where Ni content is more than 10%, it is difficult to obtain duplex microstructure, because it is difficult to obtain ferritic phase. Therefore, it is preferable that Ni content be 1% or more and 10% or less.

In addition to C, Cr, Mo and Ni described above, the following chemical elements may be contained as needed for duplex stainless steel for a separator according to the present invention.

### N: 2.0% or less

N is a chemical element that is effective for suppressing localized corrosion of duplex stainless steel for a separator. However, it is preferable that the upper limit of N content be 2.0%, because it is industrially difficult to make N content more than 2.0%. Moreover, it takes long time to make N content more than 0.4% at a smelting stage by a common smelting method, which results in a decrease in productivity. Therefore, it is referable that N content be 0.4% or less from the viewpoint of cost, more preferably 0.01% or more and 0.3% or less.

### Cu: 3.0% or less

Cu is a chemical element that is effective for improving corrosion resistance of duplex stainless steel for a separator. It is preferable that Cu content be 0.01% or more in order to realize this effect. However, in the case where Cu content is more than 3.0%, there is a decrease in hot workability, which results in a decrease in productivity. Therefore, in the case where Cu is contained, it is preferable that Cu content be 3.0% or less, more preferably 0.01% or more and 2.5% or less.

### Si: 1.5% or less

Si is a chemical element that is effective for deoxidation and is added at the smelting stage of duplex stainless steel for a separator. It is preferable that Si content be 0.01% or more in order to realize this effect. However, the excessive content of Si causes hardening of stainless steel for a separator and a decrease in ductility. Therefore, in the case where Si is contained, it is preferable that Si content be 1.5% or less, more preferably 0.01% or more and 1.0% or less.

### Mn: 0.001% or more and 2.5% or less

Mn is a chemical element that is effective for suppressing grain boundary segregation of S and for preventing fracture when hot rolling is performed, because Mn is effective for reducing solid solution S by being combined with S which is inevitably mixed into duplex stainless steel for a separator. This effect is realized in the case where Mn content is 0.001% or more and 2.5% or less. Therefore, in the case where Mn is contained, it is preferable that Mn content be 0.001% or more and 2.5% or less, more preferably 0.001% or more and 2.0% or less.

### One, two, three or all of Ti, Nb, V and Zr: 0.01% or more and 0.5% or less in total

Any of Ti, Nb, V and Zr forms carbides by reacting with C in duplex stainless steel. As Ti, Nb, V and Zr fix C in this way, these chemical elements are effective for improving grain boundary corrosion resistance of duplex stainless steel for a separator. In particular, in the case where C content is 0.08% or less, the effect of improving corrosion resistance by containing one, two, three or all of Ti, Nb, V and Zr is realized, in the case where the content of one, two, three or all of Ti, Nb, V and Zr is 0.01% or more in total.

On the other hand, the effect saturates, even if the content of one, two, three or all of Ti, Nb, V and Zr is more than 0.5%. Therefore, in the case where Ti, Nb, V or Zr is contained, it is preferable that the content of one, two, three or all of Ti, Nb, V and Zr be 0.01% or more and 0.5% or less.

In addition to the chemical elements described above, Ca, Mg, B, Rare Earth Metal (denoted by REM, too) may be contained with the content of each chemical element being 0.1% or less in order to improve hot workability of duplex stainless steel for a separator, and Al within a content range of 0.2% or less may be contained for the purpose of deoxidation at a stage of smelting, according to the present invention.

The remainder of the chemical composition consists of Fe and inevitable impurities. Among the inevitable impurities, it is preferable that the content of O (oxygen) be 0.02% or less.

### (7) Ideal method for manufacturing stainless steel

Incidentally, although there are no limitations on a method for manufacturing ferritic stainless steel, austenitic stainless steel and duplex stainless steel which are to be used as substrates and a conventional common method may be used, according to the present invention, ideal manufacturing conditions will be described as follows.

A slab having a chemical composition which is ideally adjusted undergoes hot rolling after being heated up to a temperature of 1100°C or higher, then the obtained hot-rolled steel sheet undergoes annealing at a temperature in the range of 800°C or higher and 1100°C or lower, then the annealed steel sheet undergoes cold rolling and annealing repeatedly, and then stainless steel sheet is obtained. It is ideal that the thickness of the obtained stainless steel sheet is 0.02 mm or more and 0.8 mm or less. Here, although it is efficient that finishing annealing and pickling are performed continuously online, a part or the entire of the processes may be performed separately off-line, and rinsing with water and so forth may be performed between the processes.

### (8) Titanium and titanium alloy to be used as a substrate

Although there are no particular limitations on a microstructure or a chemical composition of titanium and titanium alloy according to the present invention, it is preferable that Ti content be 70 mass% or more in order to obtain a passive state film which is made mainly of titanium oxide that has excellent corrosion resistance. Moreover, various kinds of chemical elements may be contained in order to improve corrosion resistance, strength, workability and so forth.

The reason for limitation of a specific microstructure and chemical composition of titanium (hereinafter, refers to commercially pure titanium) or titanium alloy will be described as follows.

### • Microstructure of titanium or titanium alloy:

There are no particular limitations on microstructures of titanium and titanium alloy according to the present invention.

The microstructure of titanium is α phase (hexagonal close-packed structure (hcp)) at a temperature of 882°C or lower, and is β phase (body-centered cubic structure (bcc)) at a temperature of 882°C or higher. Although the number of slip systems in plastic deformation of titanium is small, titanium is a preferable material to be worked into a separator which is one of the purposes of the present invention, because titanium has a small work hardenability and relatively good plastic workability among hexagonal metals, and, generally, is less expensive than titanium alloy.

On the other hand, the microstructure of titanium alloy is divided into three classes as follows: α type which consists mainly of α phase, β type which consists mainly of β phase, and (α+β) type which consists of α and β phases. The characteristics of the alloy varies widely depending on the kinds of alloys, because the microstructures of these titanium alloys vary depending on kinds of alloy elements and the contents of the alloy elements which are added to pure titanium, a working method and heat treatment, and because the characteristics of α phase and β phase differ from each other. (α+β) type and β type alloys are preferable, because the both can be worked into a separator which is one of the purposes of the present invention in different ways as follows: a (α+β) type alloy has superplastic characteristics and can be worked by using superplastic forming, and a β type alloy has excellent cold plastic workability and can be worked by using cold forming such as pressing forming.

The limitation of a chemical composition of titanium will be described below. Here, concerning a chemical composition, % denotes mass%, unless otherwise noted.

### Titanium:

It is advantageous that commercially pure titanium is used as titanium, and, consequently, chemical elements other than titanium are impurities. The examples of impurities include Fe, O, C, N and H, and, in particular, there is a case where O and Fe are used in order to increase strength, among these chemical elements. The more the contents of O and Fe is, the higher the strength is. However, this effect saturate in the case where the content of O and Fe is more than 1% in total. Therefore, it is preferable that the total content of O and Fe be 1% or less and that the remainder of the chemical composition be Ti. The limitation of a chemical composition of titanium alloy will be described below.

### • Ti: 70% or more

It is preferable that Ti content be 70 mass% or more in order to obtain a passive state film which is made mainly of titanium oxide that has excellent corrosion resistance.

### • Al: 0.5% or more and 9% or less

Al is contained in titanium alloy as a chemical element that is effective for stabilizing α phase and contributes to an increase in strength without decreasing corrosion resistance. It is preferable that Al content be 0.5% or more. In addition, in the case where Al content is more than 9%, there is not only an increase in deformation resistance but also a significant increase in crack sensitivity, because embrittlement phases precipitate, which results in a decrease in productivity. It is preferable that Al content be 0.5% or more and 7% or less.

In addition to the chemical elements described above, the following chemical elements may be contained in the titanium alloy according to the present invention.

### • One, two, three or all of Fe, Ni, Co and Cr: 0.2% or more and 3% or less each

Fe, Ni, Co and Cr are chemical elements that are effective for stabilizing β phase of eutectoid type, and make solid solutions mainly in β phase, increasing strength. Moreover, these chemical elements lower a temperature at which superplastic phenomenon is observed by lowering a β transformation temperature. In addition, these chemical elements are effective for decreasing deformation resistance when hot working is performed, in particular, superplastic forming is performed, and for suppressing occurrence of defects including fracture, because these chemical elements have a large diffusion velocity in titanium and increase a volume fracture of β phase. It is preferable that the content of Fe, Ni, Co and Cr be 0.2% or more each in order to realize these effects. On the other hand, in the case where the content of Fe, Ni, Co and Cr is more than 3% each, intermetallic compounds, which are embrittlement phases, are formed on the grain boundaries between these chemical elements and Ti and segregation phases, which are called β fleck, are formed when melting or solidification occurs, which results in deterioration in mechanical properties, in particular, in ductility. Therefore, it is preferable that the content of one, two, three or all of Fe, Ni, Co and Cr be 0.2% or more and 3% or less each.

### • One or both of Mo and V: 1% or more and 25% or less in total

Mo and V are chemical elements that are effective for stabilizing β phase of complete solid solution type, and make solid solutions mainly in β phase, increasing strength. Although it is preferable that the content of one or both of Mo and V be 1% or more in total in order to realize these effects, in the case where the content is more than 25%, these effects saturate. Moreover, it is not preferable that the content be more than 25%, because Mo and V are heavy and expensive chemical elements. In addition, Mo increases deformation resistance when hot working is performed, in particular, superplastic forming is performed, because Mo has a small diffusion velocity. Therefore, it is preferable that the content of Mo and V is 1% or more and 25% or less in total.

### • O: 0.05% or more and 0.5% or less

O makes solid solutions α phase, increasing strength. It is preferable that O content be 0.05% or more. On the other hand, in the case where O content is more than 0.5%, there is deterioration in cold workability and in ductility. Therefore, it is preferable that O content be 0.05% or more and 0.5% or less.

### • One or both of Zr and Sn: 0.2% or more and 6% or less in total

Zr and Sn are contained in titanium alloy as neutral chemical elements, increase strength without decreasing ductility and do not decrease corrosion resistance. Moreover, these chemical elements improve corrosive wear resistance. It is preferable that the content of Zr and Sn be 0.2% or more in total. On the other hand, in the case where the content of Zr and Sn is more than 6%, the aimed effect cannot be achieved. Therefore, it is preferable that the content of Zr and Sn be 0.2% or more and 6% or less in total.

Moreover, in addition to the chemical elements described above, the following chemical elements may be contained as needed in titanium alloy according to the present invention.

### • Si: 0.5% or less

Si is a chemical element that is effective for improving corrosive wear resistance and is added at a stage of smelting of titanium alloy. However, the excessive content of Si forms intermetallic compounds on the grain boundaries with Ti, which results in a decrease in ductility. Therefore, in the case where Si is contained, it is preferable that Si content be 0.5% or less, more preferably 0.05% or more and 0.5% or less.

### • One or both of Mn and Cu: 5% or less in total

Mn and Cu are chemical elements that are effective for stabilizing β phase of eutectoid type, and make solid solutions mainly in β phase, increasing strength. Moreover, these chemical elements lower a temperature at which superplastic phenomenon is observed by lowering a β transformation temperature. It is preferable that the content of one or both of Mn and Cu be 0.2% or more in total in order to realize these effects. On the other hand, in the case where the content of Mn and Cu is more than 5% in total, intermetallic compounds, which are embrittlement phases, are formed between these chemical elements and Ti and segregation phases, which are called β fleck, are formed when melting and solidification occurs, which results in deterioration in mechanical properties, in particular, in ductility. Therefore, it is preferable that the content of one or both of Mn and Cu be 5% or less in total.

Moreover, in addition to the chemical composition described above, Pd or Ru may be contained with the content of each chemical element being 0.5% or less for the titanium alloy according to the present invention. These chemical elements increase corrosion resistance of the titanium alloy. It is preferable that the content of each chemical element be 0.01% or more in order to realize this effect. However, excessive content of these chemical elements increases a cost, because these chemical elements are very expensive. Therefore, the upper limit of the content of these chemical elements is set to be 0.5% each.

The remainder of the chemical composition consists of Ti and inevitable impurities.

### (9) Ideal method for manufacturing titanium and titanium alloy

The ideal method for manufacturing titanium and titanium alloy according to the present invention will be described as follows.

An ingot of titanium or titanium alloy which has a chemical composition described above undergoes slabbing forging or slabbing rolling with the cast structure being broken into nearly uniform microstructure, and then the obtained slab is made into the specified shape by hot working including hot forging, hot rolling and hot extrusion. In this case, as there is a suitable temperature range for hot working and hot rolling from the viewpoint of workability, in the case where an ingot of a large section or a slab is rolled or in the case where a thin material is made by using rolling (hereinafter, called thin material rolling), it is difficult that the ingot or the slab is made into the specified product by using rolling after heating is performed only one time. Therefore, it is preferable that multi-heating rolling is performed, which means that rolling and reheating are repeated. The obtained hot-rolled sheet undergoes cold rolling by using a large cold rolling mill for a steel sheet or for a stainless steel sheet or by using a Sendzimir rolling mill. The obtained cold-rolled sheet is annealed by using a vacuum furnace or an inert gas atmosphere furnace in order to obtain uniform mechanical properties and a grain size throughout the entire sheet. In particular, as cold rolling of titanium alloy of α type and (α+β) type tends to be more difficult than that of pure titanium, there may be the case where hot rolling that is called pack rolling is performed, in which a slab is covered with carbon steel at least on the upper and lower surfaces. Although titanium alloy of β type has good cold workability, there may be the case where the number of intermediate heating is increased in order to prevent occurrence of an edge crack and an internal crack which is caused by excessive cold rolling.

It is preferable that the obtained titanium sheet or titanium alloy sheet is used as a separator after gas flow channels is formed by using press forming, superplastic forming and so forth. It is also preferable that the obtained hot-rolled sheet that is as rolled or annealed after hot rolling is performed is made into a separator having gas flow channels which is formed by using machining.

### [EXAMPLES]

A separator of a proton-exchange membrane fuel cell is required to have low contact resistance in order to suppress a decrease in power generation efficiency. Moreover, the separator is also required to have excellent corrosion resistance, because the separator is used in severe environment in which electrical potential varies at the time of start-up and shutdown and in which a temperature is 80°C and a pH value is about 3. Therefore, the following two kinds of tests were conducted in consideration of these required characteristics.

### 1) Contact resistance

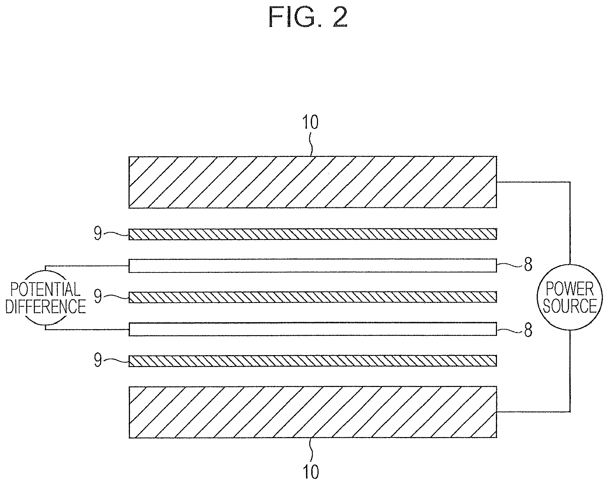

Contact resistance was defined by the value derived through the following procedures, as illustrated in Fig. 2: two test pieces 8 and three carbon papers 9 (TGP-H-120 manufactured by Toray Industries, Inc.) of the same size were placed in alternating layers, then electrodes that were made of copper sheets plated with gold were attached to the outer surfaces of the carbon papers, then resistance between the two test pieces was observed with a pressure of 9.8 MPa (=10kgf/cm²) exerted on the test pieces, and then the observed resistance was multiplied by a contacting surface area and then divided by the number of contacting surfaces (=2). Here, the observation was performed at different four points and the mean value of the observed values was derived.
○: indicates that a contact resistance is less than 10 mΩ·cm²
×: indicates that a contact resistance is 10 mΩ·cm² or more

### 2) Estimation of stability in an environment for a separator

Stability in an environment for a separator was estimated in reference to a value of current density observed at a potential of 1.0 V in forward scan of the 5th cycle of cyclic voltammogram with a potential scan range of -0.2 to 1.2 V(vs.SHE) and with a sweep rate of 200 mV/min, using saturated KCl-Ag/AgCl as a reference electrode, for a sample which was dipped in sulfuric acid aqueous solution the temperature of which was 80°C and the pH value which was 3, and a sample having the less current density was estimated as having the more stability.

In other word, the value of current density observed at a potential of 1.0 V in forward scan of the 5th cycle was classified on the basis of the following standards.
⊙: indicates that current density is less than 2.5 µA/ cm²
○: indicates that current density is 2.5 µA/cm² or more and 4 µA/cm² or less
Δ: indicates that current density is 4 µA/cm² or more and 5 µA/cm² or less
×: indicates that current density is more than 5 µA/cm²

### EXAMPLE 1 (comparative - not in accordance with invention)

A sheet that was made of SUS447J1 having a thickness of 0.1 mm and a chemical composition containing 0.003% C, 0.20% Si, 0.10% Mn, 30.0% Cr, 0.20% Ni, 2.0% Mo, 0.02% Cu, 0.14% Nb, 0.007% N and the balance Fe, a sheet that was made of SUS304 having a thickness of 0.1 mm and a chemical composition containing 0.05% C, 0.55% Si, 1.0% Mn, 18.2% Cr, 8.5% Ni, 0.02% Mo, 0.03% N and the balance Fe and a sheet that was made of titanium (JIS 1 pure titanium) having a thickness of 0.2 mm and a chemical composition containing 0.002% H, 0.04% O (oxygen), 0.01% N, 0.19% Fe and the balance Ti were used as substrates, and these metal sheets were pickled and rinsed with water, and then electro-plated by using a plating bath composition and conducting particles described below under the conditions in which the pH value was 8.1, in which the temperature was 60°C, in which the current density was 5 A/dm² and in which the bath was stirred in order to form films that were made of a Sn alloy, specifically compound films that were made of Ni₃Sn₂ which was a kind of Sn alloy containing Ni or Fe and that contained conducting particles on the surface of the substrates. The content of conducting particles in the plating bath was 10 g/L or more and 400 g/L or less and the thickness of the plated layer was 10 µm. In addition, samples, on the surfaces of which films that were made of Ni₃Sn₂ which did not contain conducting particles were formed, were also made for comparison.

### <Plating bath composition>

- NiCl₂·2H₂O: 0.15 mol/L, SnCl₂·2H₂O: 0.15 mol/L, K₂P₂O₇: 0.45 mol/L and glycine: 0.15 mol/L

### <Conducting particles>

- Carbon black (Aqua-Black 001 manufactured by Tokai Carbon co., Ltd.) having a mean grain size of 140 nm (0.14 µm)
- TiC (manufactured by Wako Pure Chemical Industries, Ltd.) having a grain size of 1 µm or more and 2 µm or less
- VC (manufactured by Kishida Chemical Co., Ltd.) having a mean grain size of 1.4 µm
- TiN (manufactured by Soekawa Chemical Co., Ltd.) having a mean grain size of 1.5 µm
- TiB₂ (manufactured by Kojundo Chemical Laboratory Co., Ltd.) having a grain size of 2 µm or more and 3 µm or less
- VB₂ (manufactured by Japan New Metals Co., Ltd.) having a grain size of 2 µm or more and 5 µm or less
- CrB₂ (manufactured by Japan New Metals Co., Ltd.) having a grain size of 3 µm or more and 6 µm or less
- TiSi₂ (manufactured by Japan New Metals Co., Ltd.) having a grain size of 2 µm or more and 5 µm or less
- ZrSi₂ (manufactured by Japan New Metals Co., Ltd.) having a grain size of 2 µm or more and 5 µm or less
- NbSi₂ (manufactured by Japan New Metals Co., Ltd.) having a grain size of 2 µm or more and 5 µm or less

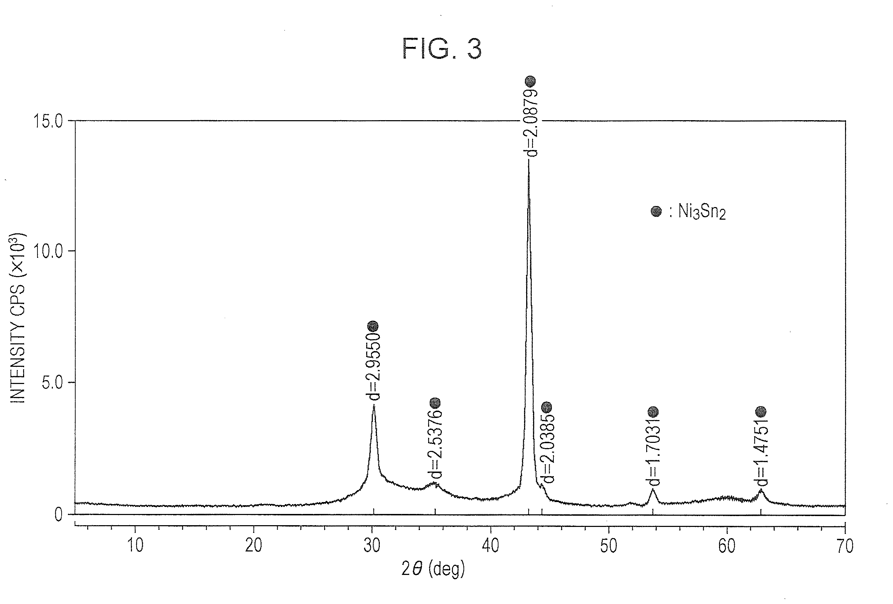

Fig. 3 illustrate the X-ray diffraction pattern of a sample which was made without containing conducting particles observed by using a thin film X-ray diffraction method. As is clearly illustrated in Fig. 3, a film that is made of Ni₃Sn₂ is formed on the surface of the sample.

The values of contact resistance of the samples obtained as described above and the results of investigations on stability in the environment for a separator are given in Table 1.

As indicated in Table 1, in the case where conducting particles were not contained, a contact resistance was more than 10 mΩ·cm², and, in contrast, in the case where conducting particles were contained, it was possible to reduce a contact resistance to 10 mΩ·cm² or less.

Moreover, regardless of whether or not conducting particles are contained, in the case where a film that is made of Ni₃Sn₂ was formed on the surface of the sample, it was possible to improve stability in the environment for a separator.

### EXAMPLE 2

A sheet that was made of SUS447J1 having a thickness of 0.1 mm, a sheet that was made of SUS304 having a thickness of 0.1 mm and a sheet that was made of titanium having a thickness of 0.2 mm, which were the same sheets as those used for example 1, were used as substrates, and these metal sheets were pickled and rinsed with water, then an intermediate layer was formed, and then a film that contains conducting particles by using a plating bath composition and conducting particles described below.

Plating was performed under the conditions in which a pH value was 8.1, in which a temperature was 60°C, and in which a current density was 5 A/dm² in order to form the intermediate layer which consisted of from one to three layers on the surface of the substrate.

Here, the intermediate layers and the film that contained conducting particles were made of Sn alloys, specifically four kinds of Sn alloys containing Ni or Fe, that is, Ni₃Sn₂, Ni₃Sn₄, FeSn and FeSn₂. Incidentally, the intermediate layer and the film containing conducting particles were made of the same kind of material.

In addition, plating was performed by using variously adjusted plating bath compositions depending on kinds of conducting particles described below under the conditions in which the pH value was 8.1, in which a temperature was 60°C, in which the current density was 5 A/dm² and in which the bath was stirred in order to form films having various kinds of thickness and various contents of conducting particles that were made of Sn alloys, specifically four kinds of Sn alloys containing Ni or Fe, that is, Ni₃Sn₂, Ni₃Sn₄, FeSn and FeSn₂ on the surfaces of the intermediate layers. The content of conducting particles in the plating bath was 10 g/L or more and 400 g/L or less. In addition, samples, on the surfaces of which films that were made of Sn alloys, specifically four kinds of Sn alloys containing Ni or Fe, that is, Ni₃Sn₂, Ni₃Sn₄, FeSn and FeSn₂ which did not contain conducting particles were formed, were also made for comparison.

### <Plating bath composition>

1) • Ni₃Sn₂
   NiCl₂·2H₂O: 0.15 mol/L, SnCl₂·2H₂O: 0.15 mol/L, K₂P₂O₇: 0.45 mol/L and glycine: 0.15 mol/L
2) • Ni₃Sn₄
   NiCl₂·2H₂O: 0.15 mol/L, SnCl₂·2H₂O: 0.30 mol/L, K₂P₂O₇: 0.45 mol/L and glycine: 0.15 mol/L
3) • FeSn
   FeCl₂·4H₂O: 0.15 mol/L, SnCl₂·2H₂O: 0.18 mol/L, K₂P₂O₇: 0.45 mol/L and glycine: 0.15 mol/L
4) • FeSn₂
   FeCl₂·4H₂O: 0.15 mol/L, SnCl₂·2H₂O: 0.36 mol/L, K₂P₂O₇: 0.45 mol/L and glycine: 0.15 mol/L

### <Conducting particles>

- Carbon black (Aqua-Black 001 manufactured by Tokai Carbon co., Ltd.) having a mean grain size of 140 nm (0.14 µm)
- TiC (manufactured by Wako Pure Chemical Industries, Ltd.) having a grain size of 1 µm or more and 2 µm or less
- VC (manufactured by Kishida Chemical Co., Ltd.) having a mean grain size of 1.4 µm
- TiN (manufactured by Soekawa Chemical Co., Ltd.) having a mean grain size of 1.5 µm
- TiB₂ (manufactured by Kojundo Chemical Laboratory Co., Ltd.) having a grain size of 2 µm or more and 3 µm or less
- VB₂ (manufactured by Japan New Metals Co., Ltd.) having a grain size of 2 µm or more and 5 µm or less
- CrB₂ (manufactured by Japan New Metals Co., Ltd.) having a grain size of 3 µm or more and 6 µm or less
- TiSi₂ (manufactured by Japan New Metals Co., Ltd.) having a grain size of 2 µm or more and 5 µm or less
- ZrSi₂ (manufactured by Japan New Metals Co., Ltd.) having a grain size of 2 µm or more and 5 µm or less
- NbSi₂ (manufactured by Japan New Metals Co., Ltd.) having a grain size of 2 µm or more and 5 µm or less

The values of contact resistance of the samples obtained as described above and the results of investigations on stability in the environment for a separator are given in Tables 2 through 5.

As indicated in Tables 2 through 5, in the case where conducting particles were not contained in the film that was made of Ni₃Sn₂ or Ni₃Sn₄, a contact resistance was more than 10 mΩ·cm², and, in contrast, in the case where conducting particles were contained, it was possible to reduce a contact resistance to 10 mΩ·cm² or less.

In addition, it was possible to make the contact resistance of the films, which were made of FeSn or FeSn₂, and which contained conducting particles, less than that of the cases where conducting particles were not contained.

Moreover, it is understood that, in the case where intermediate layers were formed, in particular, stability in the environment in which a separator is used is better in comparison to the case where intermediate layers were not formed.

In particular, as indicated in Table 2, it is understood that, in the case where the films and intermediate layers were made of Ni₃Sn₂, stability in the environment for a separator is better, independently of the thickness of films and intermediate layers, in comparison to the case where the films and intermediate layers were made of other three kinds of Sn alloys.

### [Industrial Applicability]

According to the present invention, it is possible to obtain a separator having not only a low contact resistance which is equivalent to that of a conventional separator that is made of gold plated stainless steel or graphite but also excellent corrosion resistance. Moreover, according to the present invention, a separator can be made of a metal sheet at a low cost, because it is not necessary to use a separator that is made of expensive gold plated stainless steel or graphite, which results in a decrease in a manufacturing cost of a proton-exchange membrane fuel cell.

### [Reference Signs List]

- 1: membrane-electrode assembly
- 2,3: gas diffusion layer
- 4,5: separator
- 6: air flow channel
- 7: hydrogen flow channel
- 8: test piece
- 9: carbon paper
- 10: electrode
- 11: substrate
- 12: film containing conducting particles
- 13: intermediate layer

### [Table 1]

**Table 1**

| Sample No. | Conditon of Sample | | | | Contact Resistance mΩ·cm²) | Current Density at 1.0 V in Forward Scan of the 5th Cycle (µA/cm²) | Estimation | | Note |
|---|---|---|---|---|---|---|---|---|---|
| | Substrate | Kind of Film | Conducting Particle | Content of Conducting Particle (mass%) | | | Contact Resistance | Stability in Environment for Separator | |
| 1 | SUS447 J1 | Ni₃Sn₂ | Carbon Black | 28 | 5.9 | 4.6 | ○ | Δ | Comp. Ex. |
| 2 | | | TiC | 6 | 4.8 | 2.7 | ○ | ○ | Comp. Ex. |
| 3 | | | VC | 10 | 4.9 | 3.2 | ○ | ○ | Comp. Ex. |
| 4 | | | TiN | 3 | 5.1 | 2.5 | ○ | ○ | Comp. Ex. |
| 5 | | | TiB₂ | 14 | 5.0 | 2.8 | ○ | ○ | Comp. Ex. |
| 6 | | | VB₂ | 21 | 5.2 | 3.4 | ○ | ○ | Comp. Ex. |
| 7 | | | CrB₂ | 3 | 4.8 | 3.2 | ○ | ○ | Comp. Ex. |
| 8 | | | TiSi₂ | 6 | 4.9 | 2.8 | ○ | ○ | Comp. Ex. |
| 9 | | | ZrSi₂ | 26 | 5.0 | 2.9 | ○ | ○ | Comp. Ex. |
| 10 | | | NbSi₂ | 0.5 | 5.1 | 3.1 | ○ | ○ | Comp. Ex. |
| 11 | | | None | - | 52 | 3.4 | × | ○ | Comparative Example |
| 12 | SUS304 | Ni₃Sn₂ | Carbon Black | 3 | 6.1 | 4.7 | ○ | Δ | Comp. Ex. |
| 13 | | | TiC | 28 | 5.0 | 2.8 | ○ | ○ | Comp. Ex. |
| 14 | | | VC | 0.5 | 5.1 | 3.3 | ○ | ○ | Comp. Ex. |
| 15 | | | TiN | 21 | 5.3 | 2.6 | ○ | ○ | Comp. Ex. |
| 16 | | | TiB₂ | 26 | 5.2 | 2.9 | ○ | ○ | Comp. Ex. |
| 17 | | | VB₂ | 6 | 5.4 | 3.5 | ○ | ○ | Comp. Ex. |
| 18 | | | CrB₂ | 10 | 5.0 | 3.3 | ○ | ○ | Comp. Ex. |
| 19 | | | TiSi₂ | 14 | 5.1 | 2.9 | ○ | ○ | Comp. Ex. |
| 20 | | | ZrSi₂ | 6 | 5.2 | 3.0 | ○ | ○ | Comp. Ex. |
| 21 | | | NbSi₂ | 3 | 5.3 | 3.2 | ○ | ○ | Comp. Ex. |
| 22 | | | None | - | 58 | 3.5 | × | ○ | Comparative Example |

| Sample No. | Conditon of Sample | | | | Contact Resistance (mΩ·cm²) | Current Density at 1.0 V in Forward Scan of the 5th Cycle (µA/cm²) | Estimation | | Note |
|---|---|---|---|---|---|---|---|---|---|
| | Substrate | Kind of Film | Conducting Particle | Content of Conducting Particle (mass%) | | | Contact Resistance | Stability in Environment for Separator | |
| 23 | Titanium Plate | Ni₃Sn₂ | Carbon Black | 21 | 5.8 | 4.5 | ○ | Δ | Comp. Ex. |
| 24 | | | TiC | 3 | 4.7 | 2.6 | ○ | ○ | Comp. Ex. |
| 25 | | | VC | 14 | 4.8 | 3.1 | ○ | ○ | Comp. Ex. |
| 26 | | | TiN | 28 | 5.0 | 2.4 | ○ | ⊙ | Comp. Ex. |
| 27 | | | TiB₂ | 6 | 4.9 | 2.7 | ○ | ○ | Comp. Ex. |
| 28 | | | VB₂ | 6 | 5.1 | 3.3 | ○ | ○ | Comp. Ex. |
| 29 | | | CrB₂ | 0.5 | 4.7 | 3.1 | ○ | ○ | Comp. Ex. |
| 30 | | | TiSi₂ | 26 | 4.8 | 2.7 | ○ | ○ | Comp. Ex. |
| 31 | | | ZrSi₂ | 3 | 4.9 | 2.8 | ○ | ○ | Comp. Ex. |
| 32 | | | NbSi₂ | 10 | 5.0 | 3.0 | ○ | ○ | Comp. Ex. |
| 33 | | | None | - | 56 | 3.3 | × | ○ | Comparative Example |

### [Table 2]

**Table 2**

| Sample No. | Conditon of Sample | | | | | | | | Contact Resistance (mΩ·cm²) | Current Density at 1.0 V in Forward Scan of the 5th Cycle (µA/cm²) | Estimation | | Note |
|---|---|---|---|---|---|---|---|---|---|---|---|---|---|
| | Substrate | Intermediate Layer | | | Outermost Layer | | | | | | Contact Resistance | Stability in Environment for Separator | |
| | | Kind of Film | Number of Layer | Thickness (µm) | Kind of Film | Conducting Particle | Content of Conducting Particle (mass%) | Thickness (µm) | | | | | |
| 1 | SUS447J1 | Ni₃Sn₂ | 1 | 5 | Ni₃Sn₂ | Carbon Black | 8 | 3 | 5.6 | 2.7 | ○ | ○ | Comp. Ex. |
| 2 | | | 2 | 2+2 | | TiC | 28 | 6 | 5.1 | 2.5 | ○ | ○ | Example |
| 3 | | | 1 | 8 | | VC | 10 | 2 | 5.5 | 2.5 | ○ | ○ | Comp. Ex. |
| 4 | | | 3 | 1+1+1 | | TiN | 5 | 2 | 6.0 | 2.4 | ○ | ⊙ | Example |
| 5 | | | 1 | 1 | | TiB₂ | 3 | 8 | 6.8 | 4.6 | ○ | Δ | Comp. Ex. |
| 6 | | | 1 | 3 | | VB₂ | 0.5 | 3 | 8.2 | 3.2 | ○ | ○ | Comp. Ex. |
| 7 | | | 1 | 4 | | CrB₂ | 14 | 2 | 5.4 | 2.9 | ○ | ○ | Comp. Ex. |
| 8 | | | 1 | 10 | | TiSi₂ | 23 | 1 | 5.2 | 2.4 | ○ | ⊙ | Comp. Ex. |
| 9 | | | 3 | 2+2+2 | | ZrSi₂ | 1 | 4 | 7.8 | 1.8 | ○ | ⊙ | Example |
| 10 | | | 2 | 3+3 | | NbSi₂ | 18 | 5 | 5.3 | 2.2 | ○ | ⊙ | Example |
| 11 | | | 1 | 3 | | None | - | 3 | 57 | 3.6 | × | ○ | Comparative Example |
| 12 | SUS304 | Ni₃Sn₂ | 1 | 1 | Ni₃Sn₂ | Carbon Black | 5 | 8 | 6.0 | 4.6 | ○ | Δ | Comp. Ex. |
| 13 | | | 1 | 3 | | TiC | 10 | 2 | 5.5 | 3.2 | ○ | ○ | Comp. Ex. |
| 14 | | | 2 | 3+3 | | VC | 1 | 4 | 7.8 | 2.2 | ○ | ⊙ | Example |
| 15 | | | 1 | 5 | | TiN | 8 | 3 | 5.6 | 2.7 | ○ | ○ | Comp. Ex. |
| 16 | | | 3 | 2+2+2 | | TiB₂ | 0.5 | 5 | 8.2 | 1.8 | ○ | ⊙ | Example |
| 17 | | | 2 | 2+2 | | VB₂ | 14 | 3 | 5.4 | 2.5 | ○ | ○ | Example |
| 18 | | | 1 | 10 | | CrB₂ | 28 | 3 | 5.1 | 2.4 | ○ | ⊙ | Comp. Ex. |
| 19 | | | 3 | 1+1+1 | | TiSi₂ | 23 | 3 | 5.2 | 2.4 | ○ | ⊙ | Example |
| 20 | | | 1 | 3 | | ZrSi₂ | 18 | 2 | 5.3 | 3.6 | ○ | ○ | Comp. Ex. |
| 21 | | | 1 | 8 | | NbSi₂ | 3 | 1 | 6.8 | 2.5 | ○ | ○ | Comp. Ex. |
| 22 | | | 1 | 4 | | None | - | 6 | 54 | 2.9 | × | ○ | Comparative Example |
| 23 | Titanium Plate | Ni₃Sn₂ | 2 | 3+3 | Ni₃Sn₂ | Carbon Black | 10 | 6 | 5.5 | 2.2 | ○ | ⊙ | Example |
| 24 | | | 3 | 2+2+2 | | TiC | 5 | 4 | 6.0 | 1.8 | ○ | ⊙ | Example |
| 25 | | | 1 | 4 | | VC | 14 | 1 | 5.4 | 2.9 | ○ | ○ | Comp. Ex. |
| 26 | | | 2 | 2+2 | | TiN | 3 | 2 | 6.8 | 2.5 | ○ | ○ | Example |
| 27 | | | 1 | 10 | | TiB₂ | 18 | 3 | 5.3 | 2.4 | ○ | ⊙ | Comp. Ex. |
| 28 | | | 1 | 3 | | VB₂ | 23 | 1 | 5.2 | 3.2 | ○ | ○ | Comp. Ex. |
| 29 | | | 3 | 1+1+1 | | CrB₂ | 8 | 2 | 5.6 | 2.4 | ○ | ⊙ | Example |
| 30 | | | 1 | 8 | | TiSi₂ | 1 | 2 | 7.8 | 2.5 | ○ | ○ | Comp. Ex. |
| 31 | | | 1 | 3 | | ZrSi₂ | 28 | 3 | 5.1 | 3.6 | ○ | ○ | Comp. Ex. |
| 32 | | | 1 | 1 | | NbSi₂ | 0.5 | 8 | 8.2 | 4.6 | ○ | Δ | Comp. Ex. Comparative |
| 33 | | | 1 | 5 | | None | - | 2 | 58 | 2.7 | × | ○ | Example |

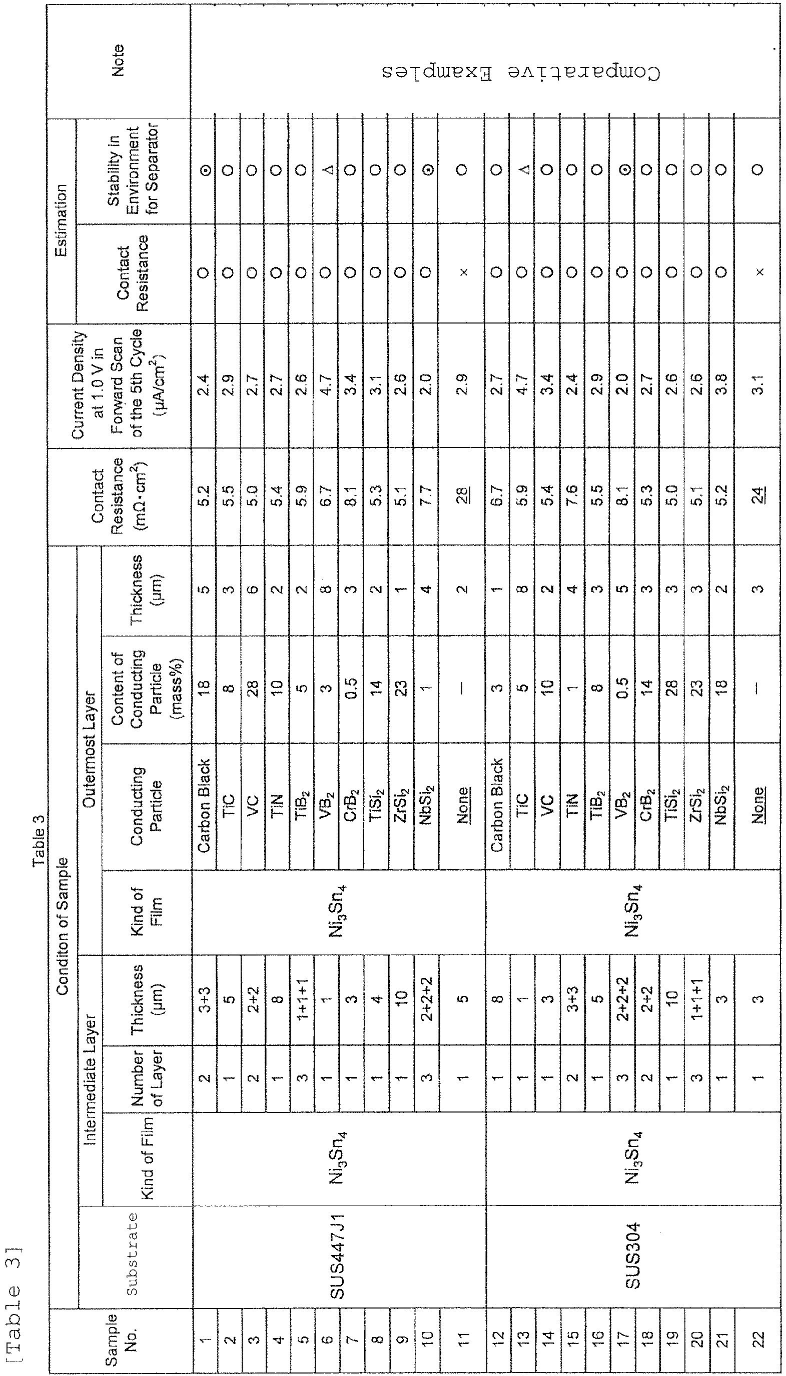

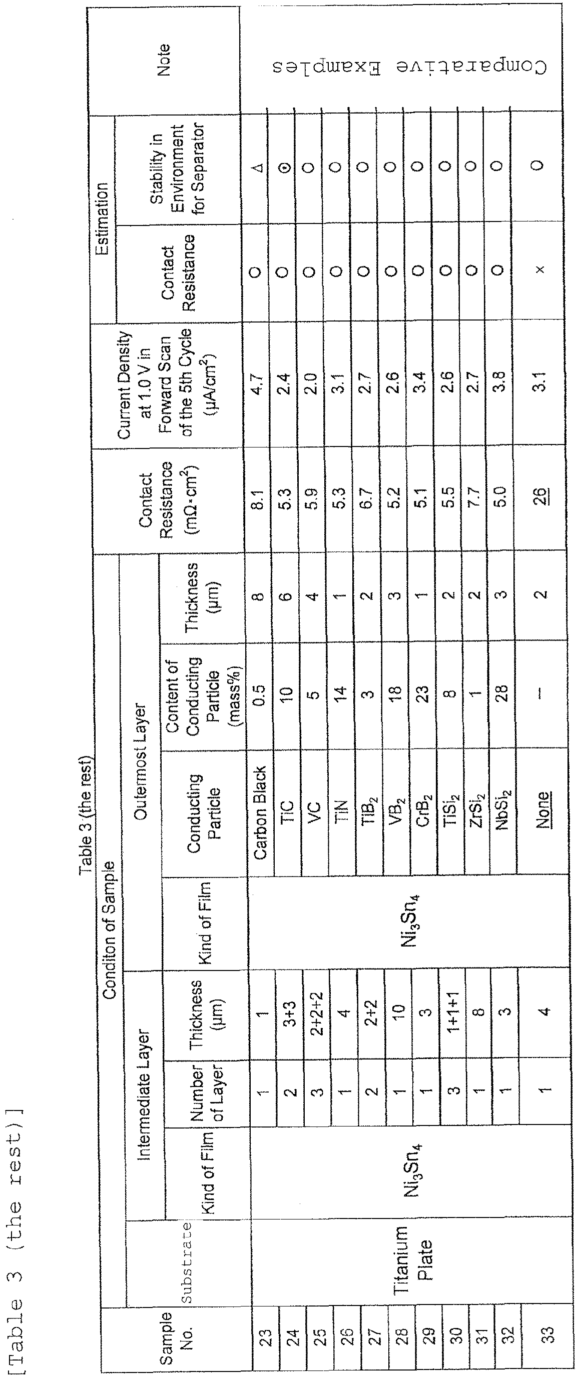

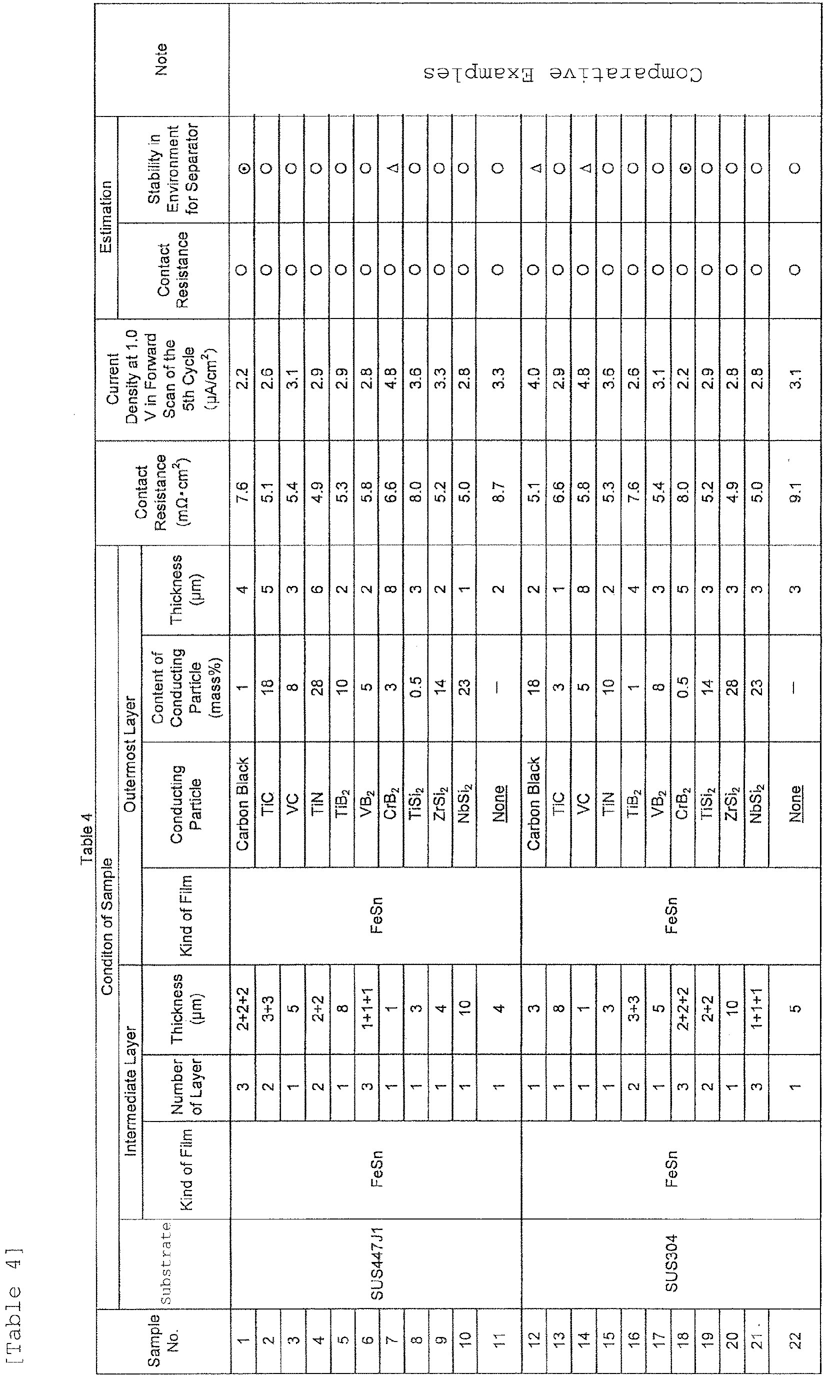

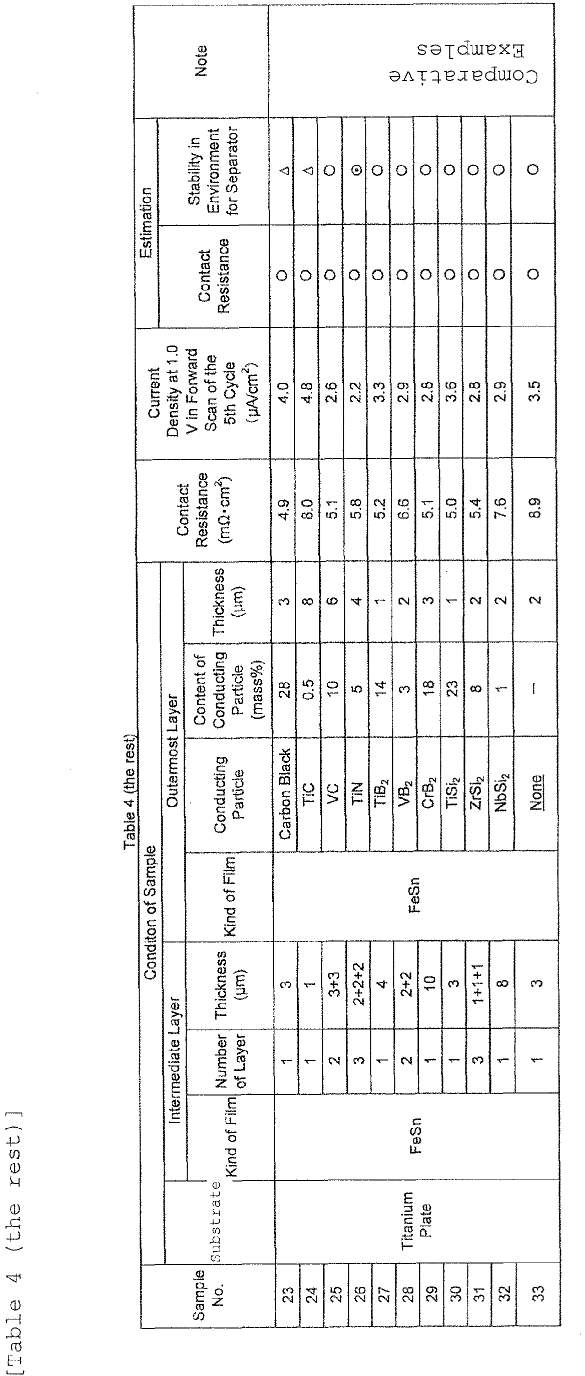

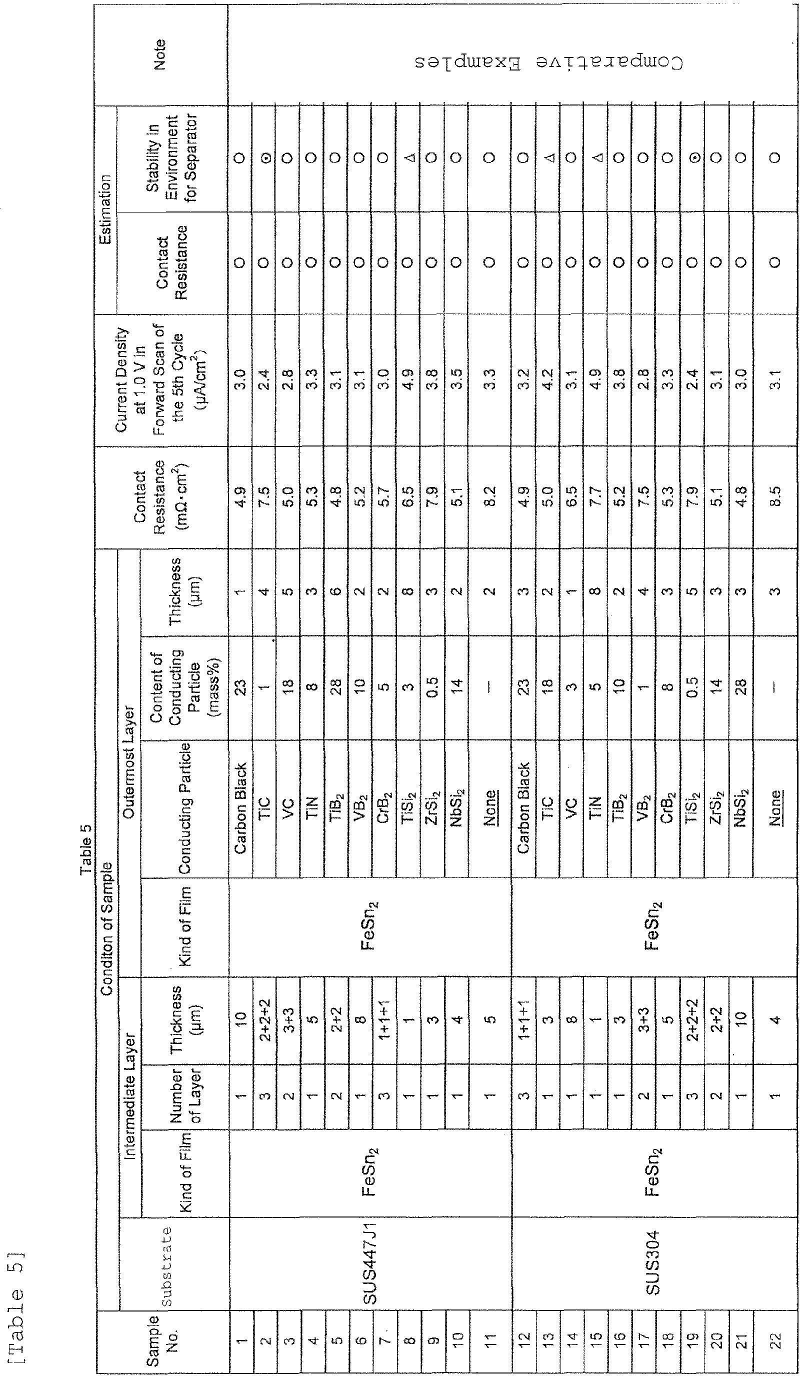

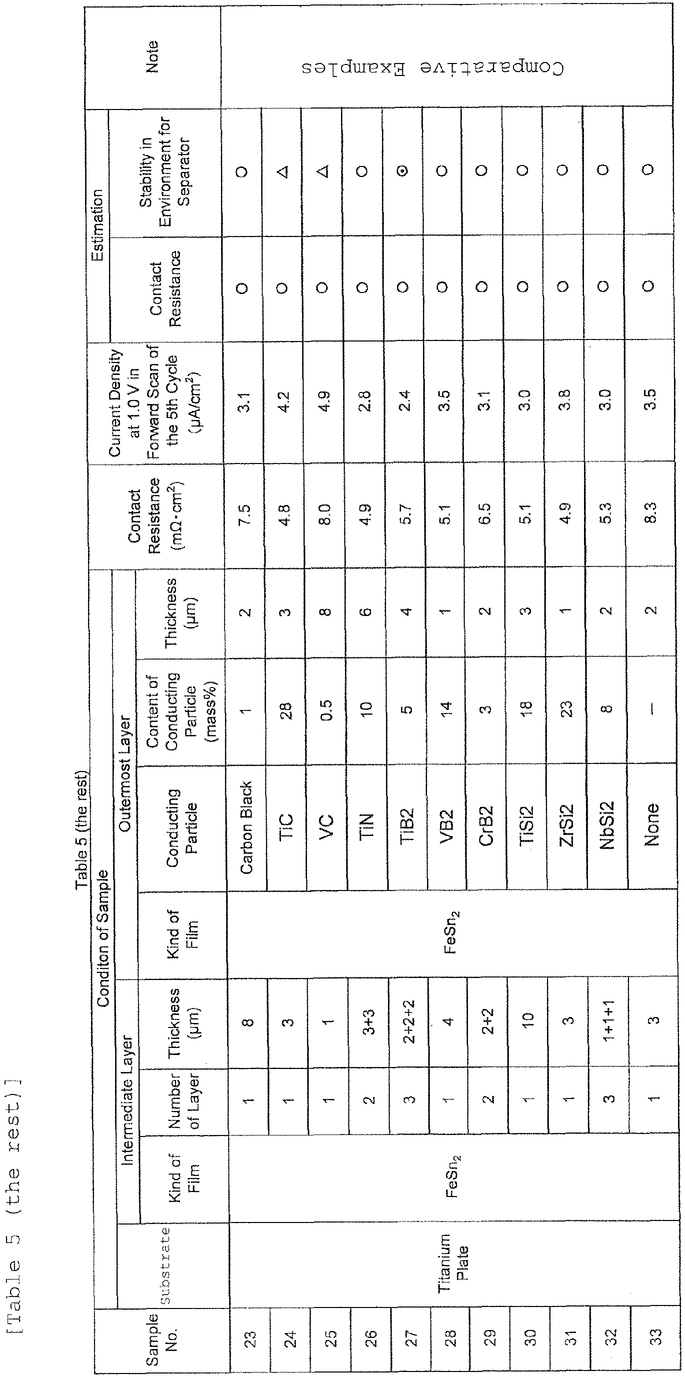

## Claims

1. A metal sheet for a separator of a proton-exchange membrane fuel cell, the metal sheet having
a substrate (11) selected from a stainless steel sheet, a titanium sheet and a titanium alloy sheet,
a film (12) covering the substrate (11) and made of an Sn alloy layer containing one or both of Ni and Fe, the film (12) containing conducting particles, and
a multilayered intermediate layer (13) made of Ni₃Sn₂ between the film (12) and the substrate (11).

2. The metal sheet for a separator of a proton-exchange membrane fuel cell according to Claim 1, the Sn alloy layer being made of Ni₃Sn₂.

3. The metal sheet for a separator of a proton-exchange membrane fuel cell according to Claim 1 or 2, the conducting particles having an electrical conductivity of 1×10² Ω⁻¹·m⁻¹ or more and having a mean grain size of 0.1 µm or more and 6 µm or less.

4. The metal sheet for a separator of a proton-exchange membrane fuel cell according to any one of Claims 1 to 3, the content of the conducting particles in the film (12) being 0.1 mass% or more and 30 mass% or less.

5. The metal sheet for a separator of a proton-exchange membrane fuel cell according to any one of Claims 1 to 4, the conducting particles being made of one or more of carbon black, TiC, VC, TiN, TiB₂, VB₂, CrB₂, TiSi₂, ZrSi₂ and NbSi₂.

6. The metal sheet for a separator of a proton-exchange membrane fuel cell according to any one of Claims 1 to 5, the multilayered intermediate layer (13) consisting of 2 layers or more and 4 layers or less and having a mean total thickness of 6 µm or less.

## Patentansprüche

1. Metallplatte für einen Separator einer Protonenaustauschmembran-Brennstoffzelle, die Metallplatte aufweisend
ein Substrat (11), ausgewählt aus einer Edelstahlplatte, einer Titanplatte und einer Titanlegierungsplatte,
eine Folie (12), die das Substrat (11) bedeckt und aus einer Sn-Legierungsschicht ist, welche eines oder beides aus Ni und Fe enthält, wobei die Folie (12) leitende Teilchen enthält, und
eine mehrschichtige Zwischenschicht (13) aus Ni₃Sn₂ zwischen der Folie (12) und dem Substrat (11).

2. Metallplatte für einen Separator einer Protonenaustauschmembran-Brennstoffzelle gemäß Anspruch 1, wobei die Sn-Legierungsschicht aus Ni₃Sn₂ ist.

3. Metallplatte für einen Separator einer Protonenaustauschmembran-Brennstoffzelle gemäß Anspruch 1 oder 2, wobei die leitenden Teilchen eine elektrische Leitfähigkeit von 1×10² Ω⁻¹·m⁻¹ oder mehr aufweisen und eine durchschnittliche Teilchengröße von 0,1 µm oder mehr und 6 µm oder weniger aufweisen.

4. Metallplatte für einen Separator einer Protonenaustauschmembran-Brennstoffzelle gemäß mindestens einem der Ansprüche 1 bis 3, wobei der Gehalt der leitenden Teilchen in der Folie (12) 0,1 Massen-% oder mehr und 30 Massen-% oder weniger beträgt.

5. Metallplatte für einen Separator einer Protonenaustauschmembran-Brennstoffzelle gemäß mindestens einem der Ansprüche 1 bis 4, wobei die leitenden Teilchen aus einem oder mehr aus Ruß, TiC, VC, TiN, TiB₂, VB₂, CrB₂, TiSi₂, ZrSi₂ und NbSi₂ sind.

6. Metallplatte für einen Separator einer Protonenaustauschmembran-Brennstoffzelle gemäß mindestens einem der Ansprüche 1 bis 5, wobei die mehrschichtige Zwischenschicht (13) aus 2 oder mehr Schichten und 4 oder weniger Schichten besteht und eine durchschnittliche Gesamtdicke von 6 µm oder weniger aufweist.

## Revendications

1. Plaque métallique pour un séparateur de pile à combustible à membrane échangeuse de protons, la plaque métallique ayant
un substrat (11) sélectionné à partir d'une plaque d'acier inoxydable, une plaque de titane et une plaque d'alliage de titane,
un film (12) recouvrant le substrat (11) et constitué d'une couche d'alliage de Sn contenant un ou les deux parmi Ni et Fe, le film (12) contenant des particules conductrices, et
une couche intermédiaire multicouche (13) constituée de Ni₃Sn₂ située entre le film (12) et le substrat (11).

2. Plaque métallique pour un séparateur de pile à combustible à membrane échangeuse de protons selon la revendication 1, la couche d'alliage de Sn étant constituée de Ni₃Sn₂.

3. Plaque métallique pour un séparateur d'une pile à combustible à membrane échangeuse de protons selon la revendication 1 ou 2, les particules conductrices ayant une conductivité électrique de 1x10² Ω⁻¹·m⁻¹ ou plus et ayant une taille de grain moyenne de 0,1 µm ou plus et de 6 µm ou moins.

4. Plaque métallique pour un séparateur d'une pile à combustible à membrane échangeuse de protons selon l'une quelconque des revendications 1 à 3, la teneur en particules conductrices dans le film (12) étant de 0,1 % en masse ou plus et de 30 % en masse ou moins.

5. Plaque métallique pour un séparateur de pile à combustible à membrane échangeuse de protons selon l'une quelconque des revendications 1 à 4, les particules conductrices étant constituées d'un ou plusieurs parmi le noir de carbone, TiC, VC, TiN, TiB₂, VB₂, CrB₂, TiSi₂, ZrSi₂ et NbSi₂.

6. Plaque métallique pour un séparateur de pile à combustible à membrane échangeuse de protons selon l'une quelconque des revendications 1 à 5, la couche intermédiaire multicouche (13) consistant en 2 couches ou plus et en 4 couches ou moins et ayant une épaisseur totale moyenne de 6 µm ou moins.
